# EUROPEAN PATENT APPLICATION

(11) **EP 3 748 560 A1**
(43) Date of publication of application: **09.12.2020**
(21) Application number: 19194297.8
(22) Date of filing: 29.08.2019
(51) Int. Cl.: G06Q 10/10, G06F 3/048

(54) **PREDICTIVE WORKFLOW CONTROL POWERED BY MACHINE LEARNING IN DIGITAL WORKPLACE**

(30) Priority: 03.06.2019 US 201916429135
(71) Applicant: SAP SE, 69190 Walldorf (DE)
(72) Inventor: WANG, Qiu Shi, 69190 Walldorf (DE); CAO, Lin, 69190 Walldorf (DE)
(74) Representative: Müller-Boré & Partner Patentanwälte PartG mbB

(57) **Abstract**

Methods, systems, and computer-readable storage media for receiving, by a digital workplace system, action data indicating an action of a user interacting with a digital workplace, transmitting, by the digital workplace system to a ML service, a request, the ML service processing the request at least partially based on the action to provide a predictive workflow file from a ML model, receiving, by the digital workplace system, the predictive workflow file, providing, by the digital workplace system, a workflow UI control comprising visual representations of one or more predicted actions of the predictive workflow file, and displaying the workflow UI control in the digital workplace.

## Description

### BACKGROUND

An enterprise can execute operations using software systems. In some examples, multiple software systems provide respective functionality. Accordingly, agents of the enterprise (e.g., employees) interface with enterprise operations through a so-called digital workplace. A digital workplace can be described as a central interface, through which a user (e.g., agent, employee) can access all of the digital applications required to perform respective tasks in operations of the enterprise. Example digital applications include, without limitation, enterprise resource planning (ERP) applications, customer relationship management (CRM) applications, email applications, instant messaging applications, virtual meeting applications, and social media applications.

To accomplish tasks, users execute a series of actions, which require access to several different applications. Further, within each application, users need the correct page, menu items, and/or user interface (UI) controls, for example, to perform a given task. This distribution across multiple applications that execute workflows results in inefficiencies and opportunities for error. Consequently, computer-implemented improvements in interactions between users and multiple applications is needed.

### SUMMARY

Implementations of the present disclosure are directed to a predictive workflow platform. More particularly, implementations of the present disclosure are directed to a predictive workflow platform that provides a workflow user interface (UI) control using one or more machine learning (ML) models to indicate predicted actions and enable initiation of a predicted action within a digital workplace.

In some implementations, actions include receiving, by a digital workplace system, action data indicating an action of a user interacting with a digital workplace, transmitting, by the digital workplace system to a ML service, a request, the ML service processing the request at least partially based on the action to provide a predictive workflow file from a ML model, receiving, by the digital workplace system, the predictive workflow file, providing, by the digital workplace system, a workflow UI control comprising visual representations of one or more predicted actions of the predictive workflow file, and displaying the workflow UI control in the digital workplace.. Other implementations of this aspect include corresponding systems, apparatus, and computer programs, configured to perform the actions of the methods, encoded on computer storage devices.

These and other implementations can each optionally include one or more of the following features: the ML service selects the ML model from a set of ML models based on the action and the user interacting with a digital workplace; the ML model is trained in a multi-stage training process comprising static training and dynamic training; the ML model is trained based on usage data of applications accessible through the digital workplace and transaction data of the applications; the ML model is customized to the user for generating the workflow UI control; the predictive workflow file defines a set of action cells, each action cell identifying a predicted action and a respective application for executing the predicted action, a visual representation being provided within the workflow UI control for each action cell; actions further include receiving user input indicating a selection of a UI element of the workflow UI control, and in response, automatically navigating the user to a page of an application to execute a task represented by the UI element.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example architecture that can be used to execute implementations of the present disclosure.
FIG. 2 depicts an example architecture in accordance with implementations of the present disclosure.
FIG. 3A depicts a portion of an example usage log of a digital workplace.
FIG. 3B depicts an example expected learning result.
FIG. 4 depicts an example workflow user interface for an example digital workplace in accordance with implementations of the present disclosure.
FIG. 5 depicts an example process that can be executed in accordance with implementations of the present disclosure.
FIG. 6 is a schematic illustration of example computer systems that can be used to execute implementations of the present disclosure.

Like reference symbols in the various drawings indicate like elements.

### DETAILED DESCRIPTION

Implementations of the present disclosure are directed to a predictive workflow platform. More particularly, implementations of the present disclosure are directed to a predictive workflow platform that provides a workflow user interface (UI) control using one or more machine learning (ML) models to indicate predicted actions and enable initiation of a predicted action within a digital workplace. Implementations can include actions of receiving, by a digital workplace system, action data indicating an action of a user interacting with a digital workplace, transmitting, by the digital workplace system to a ML service, a request, the ML service processing the request at least partially based on the action to provide a predictive workflow file from a ML model, receiving, by the digital workplace system, the predictive workflow file, providing, by the digital workplace system, a workflow UI control comprising visual representations of one or more predicted actions of the predictive workflow file, and displaying the workflow UI control in the digital workplace.

To provide further context for implementations of the present disclosure, and as introduced above, an enterprise can execute operations using software systems. In some examples, multiple software systems provide respective functionality. Accordingly, agents of the enterprise (e.g., employees) interface with enterprise operations through a so-called digital workplace. A digital workplace can be described as a central interface, through which a user (e.g., agent, employee) can access all the digital applications required to perform respective tasks in operations of the enterprise. Example digital applications include, without limitation, enterprise resource planning (ERP) applications, customer relationship management (CRM) applications, email applications, instant messaging applications, virtual meeting applications, and social media applications. Example digital workplaces include, without limitation, VMWare Workspace One, Citrix Workspace, and SAP Fiori Launchpad.

To accomplish tasks, users execute a series of actions, which requires access to several different applications. Further, within each application, users need the correct page, menu items, and/or user interface UI controls, for example, to perform a given task. This distribution across multiple applications that execute workflows results in inefficiencies and opportunities for error. For example, an employee operating in customer support may need to take a one-day leave. In today's digital work environment, the employee needs to take the following example workflow (actions) in different applications: submit a leave request (e.g., using a human capital management (HCM) application), log a timesheet (e.g., using a project management application), update a team calendar (e.g., using an ERP application), set an out of office (OOO) message (e.g., using an email application), notify co-workers (e.g., using a social media application), and check high priority customer incidents that they are assigned to and request delegation (e.g., using a CRM application).

The above example workflow can vary between different organizations, different departments and different job roles, or even different personal working habits. However, the procedures across different scenarios are similar in that they can be cumbersome and inefficient, as users have to navigate between and within multiple applications. For example, it is not uncommon for users to forget one or more necessary steps in this complex workflow. As another example, users often spend a long time figuring out how to take the correct action within an application (e.g., which page they are required to open within an application, which UI controls are required to interact with, and the necessary inputs). These issues are enhanced for users that are less experienced with particular applications.

In view of the above context, implementations of the present disclosure overcome challenges and inefficiencies of modern-day digital work places by providing computer-implemented improvements to enable users to follow the correct workflow, prevent missed steps and bring users to the right place within applications to take appropriate action. Implementations of the present disclosure also enable pre-population of correct input information in multiple applications.

In further detail, implementations of the present disclosure provide a predictive workflow platform. More particularly, implementations of the present disclosure are directed to a predictive workflow platform that provides a workflow user interface (UI) control using one or more ML models to indicate predicted actions and enable initiation of a predicted action within a digital workplace.

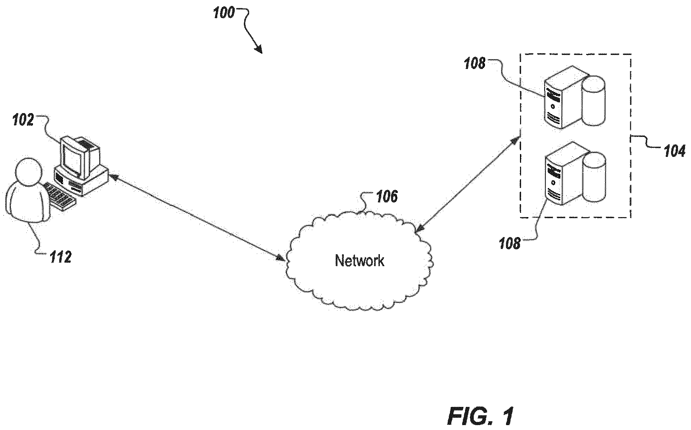

FIG. 1 depicts an example architecture 100 in accordance with implementations of the present disclosure. In the depicted example, the example architecture 100 includes a client device 102, a network 106, and a server system 104. The server system 104 includes one or more server devices and databases 108 (e.g., processors, memory). In the depicted example, a user 112 interacts with the client device 102.

In some examples, the client device 102 can communicate with the server system 104 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 104 includes at least one server and at least one data store. In the example of FIG. 1, the server system 104 is intended to represent various forms of servers including, but not limited to a web server, an application server, a proxy server, a network server, and/or a server pool. In general, server systems accept requests for application services and provides such services to any number of client devices (e.g., the client device 102 over the network 106).

In accordance with implementations of the present disclosure, and as noted above, the server system 104 can host a predictive workflow platform. For example, the user 112 interacts with a digital workplace through the computing device 102. In some implementations, the predictive workflow platform generates one or more workflow UI controls that are displayed to the user 112 in the digital workplace on the computing device 102. In some examples, the user 112 interacts with a workflow UI control to indicate predicted actions and enable initiation of a predicted action within a digital workplace.

In further detail, and as described herein, the predictive workflow platform of the present disclosure leverages one or more ML models to provide the one or more workflow UI controls. In some examples, each ML model is trained by deep learning by processing usage data of a digital workplace of an enterprise. In some examples, each ML model is optimized for different lines of enterprise operations and can achieve relatively high accuracy in workflow predictions. Further, training of the ML models continues while users interact with the digital workplace. In this manner, ML models can be personalized to cater for personal usage patterns and working habits. As described in further detail herein, the predictive workflow platform of the present disclosure increases productivity of enterprise.

In some implementations, the predictive workflow platform is cloud-based and optimized for multi-cloud deployment. By utilizing the computing power of public cloud hyperscalers, for example, the predictive workflow platform can be scaled up and scaled out to support sudden demand increases. By leveraging on Cloud Foundry, Kubemetes and other similar technology, for example, high availability and scalability of the predictive workflow platform is provided. Further, the workflow UI controls provided by the predictive workflow platform are cross-platform and metadata driven. In this manner, each workflow UI control can be integrated into a digital workplace running on different desktops and mobile devices.

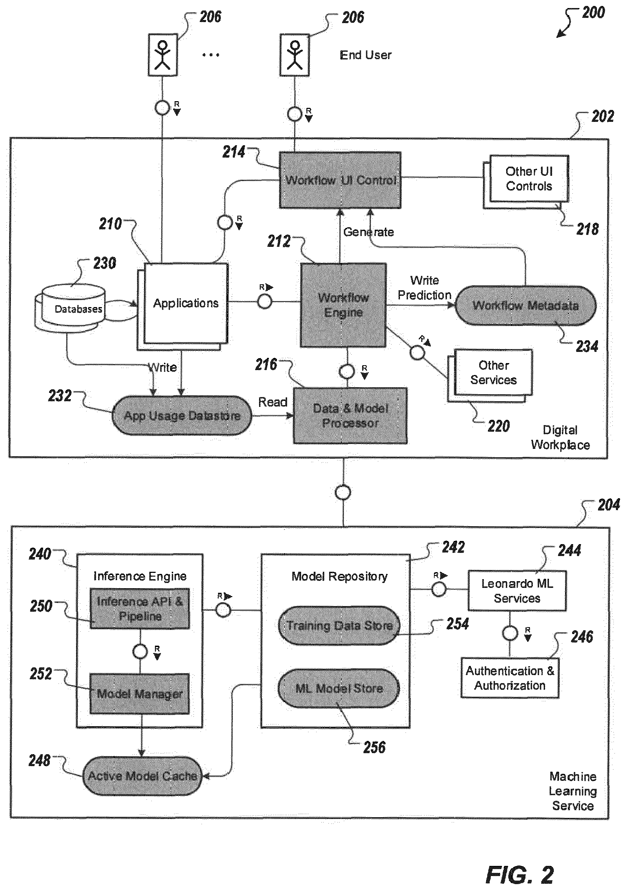

FIG. 2 depicts an example architecture 200 in accordance with implementations of the present disclosure. In the depicted example, the example architecture includes a digital workplace system 202 and a machine learning (ML) service. One or more users 206 interact with the digital workplace system 202 to perform respective tasks in enterprise operations. In some examples, the digital workplace 202 is cloud-based, running on a public cloud or a private cloud.

In the example of FIG. 2, the digital workplace 202 includes a set of applications 210 (e.g., an ERP application, a CRM application, a HCM application, an email application, a social media application), a workflow engine 212, a workflow UI control 214, a data and ML model processor 216, a set of one or more other UI control modules 218, and a set of one or more other services 220. The digital workplace 202 further includes one or more databases 230, a usage data store 232, and workflow metadata 234.

In accordance with implementations of the present disclosure, one or more applications in the set of applications 210 are used by users 206 in performing their tasks. In some implementations, the set of applications 210 are organized and controlled by the digital workplace system 202. That is, for example, the users 206 access the applications through a UI of the digital workplace system 202. In some implementations, all of the usage data of the applications in the set of applications 210 across all users 206 within an enterprise (or multiple enterprises) can be collected. For example, as the users 206 interact with applications, log entries are generated, which provide the usage data. In some examples, the one or more databases 230 are provided as a persistence service of the digital workplace system 202 and record transaction records of every application in the set of applications 210.

In some implementations, usage data is generated as part of activities executed across all of the applications in the set of applications 210 running in the digital workplace system 202. For example, and considering the above-example leave request, usage data includes, without limitation, timestamps and sequences of the above-recited actions, which applications were used to execute which actions, and the specific pages and controls in the applications that were used. This usage data is provided in a log that is logged in the usage data store 232.

In some examples, the usage data store 232, together with the databases 230, provide data that can be used to learn and understand what the typical tasks in each workflow (also referred to herein as job) should be. For a single large enterprise, hundreds to thousands of users intensively work in the digital workplace system 202, which can generate millions of usage records and transaction data every day. If hosted in a public cloud, the digital workplace system 202 could generate billions of records every day.

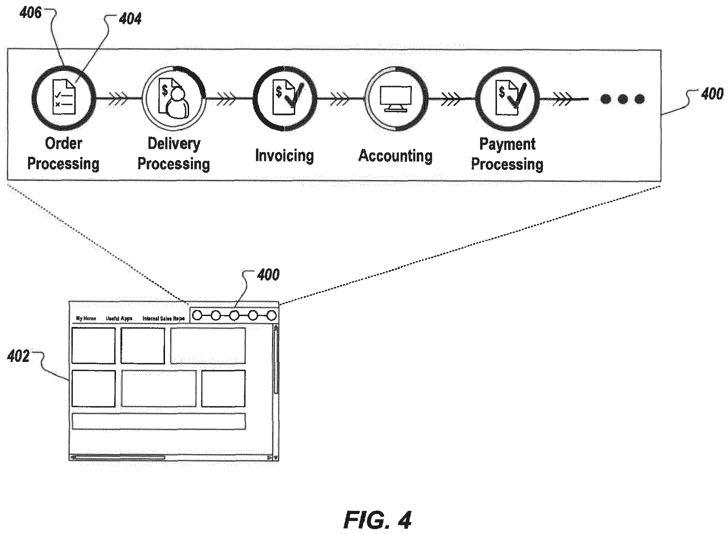

In accordance with implementations of the present disclosure, the ML service 204 leverages the usage data to analyze the usage data, discover patterns, and generate one or more ML models. In some examples, and as described in further detail herein, each ML model is continuously trained by incoming usage data to evolve together with changes in enterprise operations. In some implementations, different ML models are generated and optimized for different workflows in different lines of operations. In some examples, different ML models can be personalized to each individual user. As described in further detail herein, after the ML model is trained, it will take any user action as an input to infer what task the user is doing and predict the most likely subsequent actions that are to be taken. In some examples, the workflow UI control 214 is automatically generated by the workflow engine 214 as a workflow UI (described in further detail below with reference to FIG. 4) that can be displayed to the user 206.

In the example of FIG. 2, the ML service 204 includes an inference engine 240, a model repository 242, a ML service module 244, an authentication and authorization module 246, and an active model cache 248. The inference engine 240 includes an inference API and pipeline module 250 and a model manager module 252. The model repository 242 includes a training data store 254 and a ML model store 256.

In accordance with implementations of the present disclosure, the ML service module 244 trains one or more ML models based on usage data provided from the digital workplace system 202. An example ML service includes the SAP Leonardo Machine Learning Services provided by SAP SE of Walldorf, Germany. In further detail, during training of the ML model(s), usage data provided from the in the usage data store 232 together with the transactional data in the one or more databases 230 is read into a data and model processor (DMP) (not shown), which preprocesses the data and to provide features for training by the ML service 244. In some examples, the model repository 242 receives data from the DMP and saves the data in the training data store 254. The data is used to train the ML models by the ML service 244. The trained ML models are stored in the model repository 242 for subsequent use by the inference engine 240, as described in further detail herein.

In some implementations, training of a ML model includes multiple stages. Example stages include, without limitation, load data, process data, identify features, configure algorithms, train model, deploy model, and host model. In the load data stage, the usage data in the usage data store 232 and the transactional data in the one or more databases 230 are read into the DMP as a dataset.

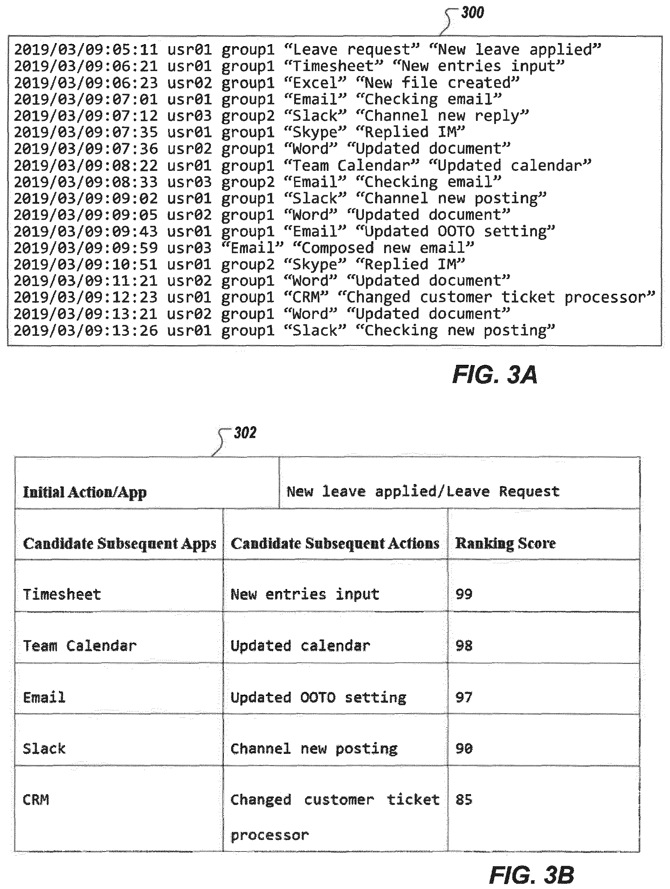

FIG. 3A depicts a portion of an example usage log 300 of a digital workplace. In some examples, the example usage log 300 provides data that is included in the dataset that is to be used to train the ML model(s). In the example of FIG. 3, timestamps (including date) are provided for a set of users (e.g., usr01, usr02, usr03), groups of users (e.g., group1, group2).

In the process data stage, the dataset is preprocessed in the DMP. In some examples, preprocessing can include generating additional data (e.g., to calculate the time a user spent in an application, such as in the example of FIG. 3A, the user "usr01" begun using the app "Leave Request" at 2019/03/09:05:11 and switched to the app "Timesheet" at 2019/03/09:06:21, so the user spent 50 seconds on "Leave Request"). In some examples, preprocessing can include normalizing and standardizing the dataset. Normalization makes training less sensitive to the scale of features, that enables more accurate calculation of coefficients, for example. In some examples, normalization can include resolving massive outliers and binning issues, such as removing data entries of extremely long application usage times (e.g., caused by operating system sleep). Standardization is used to transform the data with large difference in scales and units to a standard normal distribution (e.g., based on a given mean standard deviation). Standardization can contribute to optimizing performance of subsequent ML training.

In some examples, in the identify features stage, the DMP detects and identifies features in the preprocessed dataset. In some examples, a list of features is provided (e.g., in a plain text file in JSON format). A feature can be described as an input variable that is used in making predictions from an ML model. In the context of the present disclosure, features can include, without limitation, the presence or absence of application names and user identifiers, the time a user spent on an application, a frequency of specific terms (e.g., ticket, calendar), the structure and sequence of usage logging records, logged actions (e.g., updated setting, new entries input). In some examples, the selection of features varies between different enterprises and different departments. Consequently, feature selection can be optimized for different lines of operations and/or different use cases to achieve higher predictive accuracy from respective ML models.

In some examples, base features can include initial application (app) and initial action, based on which, subsequent actions can be predicted. In the leave request example, introduced above, the "initial app" is "Leave Request" and the "initial action" is "New leave applied."

In the configure algorithms stage, parameters for a ML algorithm are configured. In some examples, the ML algorithm includes a deep neural network (DNN) algorithm, and a list of hyper-parameters that change the behavior of the DNN are configured. The hyper-parameters determine the structure of the neural network and the variables that determine how the neural network is trained. In some examples, the hyper-parameters are configured in a JSON plain text file with key/value pairs, where the user (e.g. a data scientist in the individual enterprise) can specify the hyper-parameters. Example hyper-parameters include, without limitation, hyper-parameters related to the structure of the neural network (e.g., number of hidden layers, number of units, dropout, network weight initialization, activation function), and hyper-parameters related to training (e.g., momentum, number of epochs, batch size).

With all of the datasets, the list of features and the list of hyper-parameters in place, the ML service 244 is consumed (e.g., on cloud) to execute the ML model training. In the example of FIG. 2, the ML service 244 is separate from the digital workplace system 202, and runs in a stack of composable, portable, and scalable containers (e.g. Kubemetes) on cloud, which can be public cloud hyperscalers. By utilizing the computing power of public cloud hyperscalers, the ML service 244 can be easily and quickly scaled up and scaled out to support the dynamic changes of ML model training demand.

In the train model stage, training occurs in the ML service 244 on cloud. In some examples, multiple types of training are provided. A first type of training includes static training (also referred to as offline training), in which the training dataset is relatively large. In static training, there are long lists of identified features, such as initial apps and initial actions, which can be any apps and actions applicable to the enterprise. As a result, the computing complexity and time of static training is significant. Static training only happens with the existing history dataset and only before solution deployment. The generated models are saved in the ML model store for later customization. A second type of training includes dynamic training (also referred to as online training), which occurs when the users interact with the digital workplace system 202 (e.g., a user submits a new leave request). In dynamic training, some features are defined (e.g., initial app and initial action are confirmed as "New leave applied/Leave Request", and user name, department name are also confirmed). The training dataset is also relatively small, only including relevant data. Accordingly, dynamic training is very efficient in terms of time and space complexity. The purpose of dynamic training is to customize the ML model to get a more accurate predication.

In some implementations, to implement training, multiple neural networks are used. In some examples, a first neural network (candidate neural network) is used for candidate action generation and a second neural network (ranking neural network) is used for ranking the candidate action. In the first step, the candidate neural network generates a list of the most relevant candidate actions based on defined features (e.g., the initial apps and actions). The goal of the first step is to select a group of the most relevant actions from a large training dataset for all of the possible initial apps and initial actions. In the second step, the ranking network customizes the result of the candidate neural network for specific users and groups by analyzing the relevant actions more carefully so as to make the best decisions. The result from the ranking neural network is a list of proposed applications and actions with respective scores. The benefit of this multi-staged approach is that it enables predictions to be made from a very large dataset, while still personalizing the predictions for specific users and groups with a smaller relevant dataset. In this manner, implementations of the present disclosure are optimized for different lines of operations, departments, and personas with relatively high prediction accuracy. Further, the second training step is interactive with the user, while using digital workplace, and is thus, personalized to cater for different personal usage patterns and working habits.

FIG. 3B depicts an example expected learning result 302. More particularly, the example expected learning result 302 of FIG. 3B illustrates predicted applications and actions within the applications for a particular user (e.g., usr01 of FIG. 3A) based on an initial action and an initial application (e.g., new leave applied, Leave Request).

In the deploy models stage, generated ML models are deployed for use in making predictions. In some implementations, the ML models are deployed through a prediction microservice on cloud. In this manner, the scalability of a cloud network can be leveraged to support high consumption demands. In the host models stage, the deployed ML models (e.g., as a microservice) are hosted in the model repository 242.

During runtime (i.e., active use of the ML models to make predictions), when the user takes an action (e.g., submitting a leave request by opening the HCM app and submitting a new leave request), the workflow engine 212 is triggered to generate a predictive workflow for the action. At this point, the workflow engine 212 is working as a proxy. In the background, the workflow engine 212 sends an API call to the inference engine 240, which retrieves an appropriate ML model from the model repository 242. In some examples, the appropriate ML model is determined based on the type of action, a profile of the user, and any other appropriate criteria. In some examples, the model repository selects and retrieves the appropriate ML model and puts the ML model into the active model cache 248. The inference engine 240 engages the ML model in the active model cache 248 through the model manager 252. The input to the ML model includes a current action taken by the user. The output of the execution of ML model is a predictive workflow file.

In accordance with implementations of the present disclosure, and as described herein, a static ML model is selected from the model repository 242 (e.g., based on the user profile, role of user (HR manager, CRM support engineer, etc.), and is optimized as a dynamic ML model. That is, the static ML model is optimized to provide the dynamic ML model. In some examples, optimization is performed by dynamic training described herein. In some examples, the dynamic training is executed using action types of most frequently used actions (HR, CRM, etc.) of the user and/or a user group (e.g., user-specific usage data, usage data specific to a user group that the user is in). In some implementations, the ML model that is provided to the active model cache 248 is either the static ML model of the dynamic ML model.

In accordance with implementations of the present disclosure, the ML model provides a prediction as a predictive workflow file. In some implementations, the predictive workflow file defines a sequential list of further actions with respect to the current user action. In some examples, the predictive workflow file is metadata-based and in a format that is platform independent (e.g., JSON). In some examples, the list of actions is provided in the format of key value pairs, which refers to the respective applications, pages, and controls, and also includes parameterized data from a previous action (e.g., the from and to dates of the leave requested in the leave request example). Example content of a predictive workflow file can be provided as:

```
 "ActionCells":
 [
       {"ActionCell": {
              "DetailImage": "Images/banner1.png",
              "DetailImageIsCircular": false,
              "OnPress": "Actions/App1.action",
              "Title": "Globals/Title1.global",
              "Subhead": "Globals/Subheadl.global",
          }
       },
       {
         "ActionCell": {
              "DetailImage": "Images/banner2.png",
              "DetailImageIsCircular": false,
              "OnPress": "Actions/App2.action",
              "Title": "Globals/Title2.global",
              "Subhead": "Globals/Subhead1.global",
           }
       },
       {
         "ActionCell": {
              "DetailImage": "Images/banner3.png",
              "DetailImageIsCircular": false,
              "OnPress": "Actions/App2.action",
              "Title": "Globals/Title2.global",
              "Subhead": "Globals/Subheadl.global","
          }
       }
 ],
 "_Type": "Workflow.Type.ActionCells"
```

In some implementations, the predictive workflow file is provided to the workflow engine (WE). After receiving the predictive workflow file, the workflow engine 212, which generates the workflow UI control 214 based on the predictive workflow file. In some example, the workflow UI control includes image buttons and/or icon buttons indicating the application(s) required to be acted upon, and a progress indicator built-into the button specifying the progress status of respective actions. In some examples, the user can select (e.g., click on) a button to initiate execution of an action, and the progress status of the respective action will be automatically updated.

FIG. 4 depicts an example workflow UI control 400 for an example digital workplace 402 in accordance with implementations of the present disclosure. In the example of FIG. 4, the example workflow UI control 400 includes UI elements 404 (e.g., buttons), each indicating a respective task, and a progress indicator 406. In some examples, the progress indicator 406 visually indicates a degree of progress towards completion of a respective task. The user can select (e.g., click on) a UI element 404, and in response, the user is automatically navigated to the application and page of the application for working on the respective task.

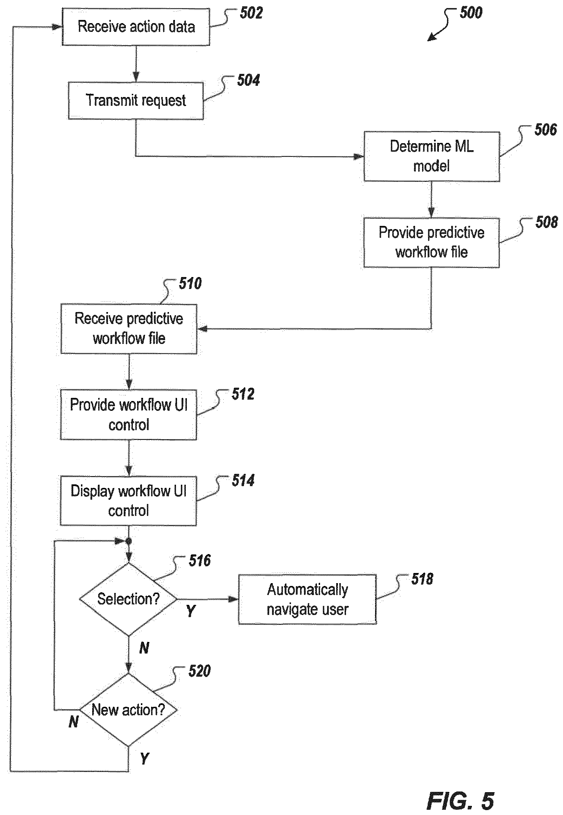

FIG. 5 depicts an example process 500 that can be executed in accordance with implementations of the present disclosure. In some examples, the example process 500 is provided using one or more computer-executable programs executed by one or more computing devices.

Action data is received (502). For example, and as described herein, a user can initiate an action within the digital workplace system 202 (e.g., submit a leave request) and the workflow engine 212 can receive action data representative of the action. A request is transmitted (504). For example, the digital workplace system 202 transmits a request for a predictive workflow corresponding to the action and the user to the ML service system 204. In some examples, the inference engine 240 receives the request and provides at least a portion of the request to the model repository 242.

An ML model is determined (506). For example, the model repository 242 selects a trained ML model from the ML model store 256 based on at least a portion of the request (e.g., user profile or role of user group (HR manager, CRM support engineer etc.). In some examples, the selected ML model is customized to the particular user (e.g., based on dynamic training described herein). A predictive workflow file is provided (508). For example, the ML model is executed in the active model cache 248 to generate the predictive workflow file. In some examples, the predictive workflow file provides a set of actions and respective applications that can be performed.

The predictive workflow file is received (510). For example, the predictive workflow file is transmitted to the digital workplace system 202 from the ML service system 204. A workflow UI control is provided (512). For example, the workflow engine 212 processes the predictive workflow file to generate the workflow UI control. The workflow UI control is displayed (514). For example, the workflow UI control is displayed in a screen of the digital workplace, as described herein (e.g., with reference to FIG. 4).

It is determined whether a UI element is selected (516). For example, it is determined whether the user selected a UI element from the workflow UI control displayed in the digital workplace screen. If a UI element is selected, the user is automatically navigated to a page of an application for execution of the action represented by the selected UI element (518). In some examples, one or more fields required to execute the action are pre-populated. If a UI element is not selected, it is determined whether a new action has been initiated (520). For example, it can be determined that the user has initiated a different action. If a new action has not been initiated, the example process 500 loops back to determine whether a UI element is selected. If a new action has been initiated, the example process 500 loops back to receive action data corresponding to the new action.

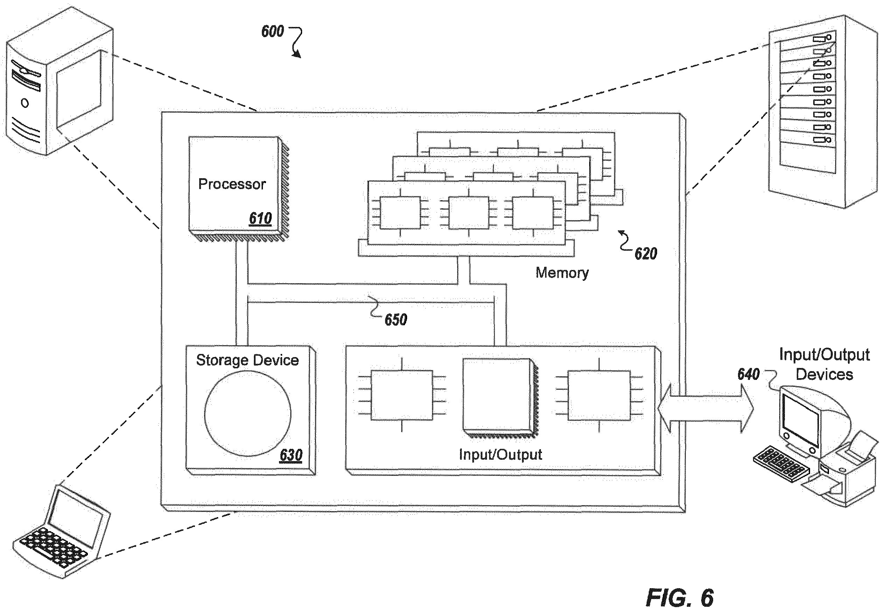

Referring now to FIG. 6, a schematic diagram of an example computing system 600 is provided. The system 600 can be used for the operations described in association with the implementations described herein. For example, the system 600 may be included in any or all of the server components discussed herein. The system 600 includes a processor 610, a memory 620, a storage device 630, and an input/output device 640. The components 610, 620, 630, 640 are interconnected using a system bus 650. The processor 610 is capable of processing instructions for execution within the system 600. In some implementations, the processor 610 is a single-threaded processor. In some implementations, the processor 610 is a multi-threaded processor. The processor 610 is capable of processing instructions stored in the memory 620 or on the storage device 630 to display graphical information for a user interface on the input/output device 640.

The memory 620 stores information within the system 600. In some implementations, the memory 620 is a computer-readable medium. In some implementations, the memory 620 is a volatile memory unit. In some implementations, the memory 620 is a non-volatile memory unit. The storage device 630 is capable of providing mass storage for the system 600. In some implementations, the storage device 630 is a computer-readable medium. In some implementations, the storage device 630 may be a floppy disk device, a hard disk device, an optical disk device, or a tape device. The input/output device 640 provides input/output operations for the system 600. In some implementations, the input/output device 640 includes a keyboard and/or pointing device. In some implementations, the input/output device 640 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

A number of implementations of the present disclosure have been described. Nevertheless, it will be understood that various modifications may be made without departing from the spirit and scope of the present disclosure. Accordingly, other implementations are within the scope of the following claims.

## Claims

1. A computer-implemented method for providing workflow user interface (UI) controls for display in digital workplaces, the method being executed by one or more processors and comprising:
receiving, by a digital workplace system, action data indicating an action of a user interacting with a digital workplace;
transmitting, by the digital workplace system to a machine learning (ML) service, a request, the ML service processing the request at least partially based on the action to provide a predictive workflow file from a ML model;
receiving, by the digital workplace system, the predictive workflow file;
providing, by the digital workplace system, a workflow UI control comprising visual representations of one or more predicted actions of the predictive workflow file; and
displaying the workflow UI control in the digital workplace.

2. The method of claim 1, wherein the ML service selects the ML model from a set of ML models based on the action and the user interacting with a digital workplace, and/or
wherein the ML model is trained in a multi-stage training process comprising static training and dynamic training.

3. The method of claim 1 or 2, wherein the ML model is trained based on usage data of applications accessible through the digital workplace and transaction data of the applications, and/or
wherein the ML model is customized to the user for generating the workflow UI control.

4. The method of any one of the preceding claims, wherein the predictive workflow file defines a set of action cells, each action cell identifying a predicted action and a respective application for executing the predicted action, a visual representation being provided within the workflow UI control for each action cell.

5. The method of any one of the preceding claims, further comprising receiving user input indicating a selection of a UI element of the workflow UI control, and in response, automatically navigating the user to a page of an application to execute a task represented by the UI element.

6. A non-transitory computer-readable storage medium coupled to one or more processors and having instructions stored thereon which, when executed by the one or more processors, cause the one or more processors to perform operations for providing a workflow user interface (UI) control for display in a digital workplace, the operations comprising:
receiving, by a digital workplace system, action data indicating an action of a user interacting with a digital workplace;
transmitting, by the digital workplace system to a machine learning (ML) service, a request, the ML service processing the request at least partially based on the action to provide a predictive workflow file from a ML model;
receiving, by the digital workplace system, the predictive workflow file;
providing, by the digital workplace system, a workflow UI control comprising visual representations of one or more predicted actions of the predictive workflow file; and
displaying the workflow UI control in the digital workplace.

7. The computer-readable storage medium of claim 6, wherein the ML service selects the ML model from a set of ML models based on the action and the user interacting with a digital workplace.

8. The computer-readable storage medium of claim 6 or 7, wherein the ML model is trained in a multi-stage training process comprising static training and dynamic training, and/or
wherein the ML model is trained based on usage data of applications accessible through the digital workplace and transaction data of the applications.

9. The computer-readable storage medium of any one of claims 6 to 8, wherein the ML model is customized to the user for generating the workflow UI control.

10. The computer-readable storage medium of any one of claims 6 to 9, wherein the predictive workflow file defines a set of action cells, each action cell identifying a predicted action and a respective application for executing the predicted action, a visual representation being provided within the workflow UI control for each action cell.

11. The computer-readable storage medium of any one of claims 6 to 10, wherein operations further comprise receiving user input indicating a selection of a UI element of the workflow UI control, and in response, automatically navigating the user to a page of an application to execute a task represented by the UI element.

12. A system, comprising:
a computing device; and
a computer-readable storage device coupled to the computing device and having instructions stored thereon which, when executed by the computing device, cause the computing device to perform operations for providing a workflow user interface (UI) control for display in a digital workplace, the operations comprising:
receiving, by a digital workplace system, action data indicating an action of a user interacting with a digital workplace;
transmitting, by the digital workplace system to a machine learning (ML) service, a request, the ML service processing the request at least partially based on the action to provide a predictive workflow file from a ML model;
receiving, by the digital workplace system, the predictive workflow file;
providing, by the digital workplace system, a workflow UI control comprising visual representations of one or more predicted actions of the predictive workflow file; and
displaying the workflow UI control in the digital workplace.

13. The system of claim 12, wherein the ML service selects the ML model from a set of ML models based on the action and the user interacting with a digital workplace, and/or
wherein the ML model is trained in a multi-stage training process comprising static training and dynamic training.

14. The system of claim 12 or 13, wherein the ML model is trained based on usage data of applications accessible through the digital workplace and transaction data of the applications, and/or
wherein the ML model is customized to the user for generating the workflow UI control.

15. The system of any one of claims 12 to 14, wherein the predictive workflow file defines a set of action cells, each action cell identifying a predicted action and a respective application for executing the predicted action, a visual representation being provided within the workflow UI control for each action cell.
